# EUROPEAN PATENT APPLICATION

(11) **EP 3 950 385 A1**
(43) Date of publication of application: **09.02.2022**
(21) Application number: 21188157.8
(22) Date of filing: 28.07.2021
(51) Int. Cl.: B60C 9/00, B60C 9/20, B60C 9/28

(54) **TIRE WITH A SHEARBAND STRUCTURE**

(30) Priority: 07.08.2020 US 202016987446
(71) Applicant: The Goodyear Tire & Rubber Company, Akron, OH 44316 (US)
(72) Inventor: CELIK, Ceyhan, Stow, 44224 (US)
(74) Representative: Goodyear IP Law

(57) **Abstract**

A tire having at least one carcass ply (13, 13a, 14), a tread (22) disposed radially outward of a crown region (20) of the carcass ply (13, 13a, 14), and a shear band structure (30, 21) having an overall axial width equal or substantially equal to a tread width or having an overall axial width in a range of from 95 to 105 percent of the tread width is disclosed. The shear band structure (30, 21) is interposed between the tread (22) and the crown region (20) in circumferential surrounding relation to the at least one carcass ply (13, 13a, 14). The shear band structure (30, 21) includes a first shear band layer (16, 22) and a second shear band layer (17, 23) radially adjacent the first shear band layer (16, 22). The first shear band layer (16, 22) includes a first reinforced composite with first reinforcement cords (31) embedded in a first rubber matrix (32), the first reinforcement cords (31) being aramid cords of a first cord construction and having a twist multiplier (TM) in a range of from 2.0 to 6.0.

## Description

### Field of the Invention

The present invention relates to both pneumatic and non-pneumatic tires, and more specifically, for a shearband structure interposed between a tread portion and other structures of the tire.

### Background of the Invention

Shear band assemblies for tires are known. In one conventional assembly, a folded ply may be reinforced with cords of high modulus material and may have an overall width at least equal to that of the tread portion. Each of its lateral sides may be folded back, in a radially outward direction, around two unfolded single cut plies. The reinforcing cords of the folded ply may form an angle between 20 and 60 degrees relative to the with respect to the equatorial plane of the tire with those of the two single cut plies forming equal and opposed angles with respect to the equatorial plane of the tire.

Because of material limitations, conventional tire constructions have tended to be robust (e.g., heavy and many components, etc.). Such constructions may tend to have a high rolling resistance, which lowers fuel economy; and the bulk of the construction may have a tendency to limit durability and handling response, as well as increasing material cost. It has been a continuing goal to identify lightweight, high strength, and highly durable materials, and to find suitable uses for such materials in tires, such that the weight of tires may be reduced while other properties are enhanced and/or maintained.

Aramid reinforcement material has shown excellent fatigue resistance. This property made the material suitable for application of a relatively low twist to the cord, which made it possible to maintain durability and elongation characteristics in a lower density material. One conventional shear band assembly has shown improved handling properties when reinforcement cords were reduced to 1100 dTex from 1670 dTex. One conventional overlay structure may be reinforced with aramid cords having a twist level between 6 TPI (turns per 2.54 cm) and 14 TPI.

One conventional shear band structure may be reinforced with 420 to 1100 dTex aramid cords, with a measured toughness of 30 MPa to 50 MPa, an initial modulus 15,000 MPa to 40,000 MPa, a tenacity of 140 cN/Tex to 200 cN/Tex, and a dynamic flex fatigue retained break strength of 50% to 100%. These shear bands may be reinforced with reinforcement cords extending parallel to one another and making an angle of 10° to 40° with respect to the equatorial plane (EP) of the tire. The shear band assembly may comprise a folded shearband with folded portions on each lateral side folded radially over a cut shear band. The axially outer portions of the folded shearband may be folded in a radially outward direction and disposed radially outward of the cut shearband.

Another conventional tire may have an overlay structure disposed radially outward from the shear band assembly. Helical convolutions of a ribbon may be wound axially across two single cut plies such that the convolutions are in abutting contact with each other. The ribbon may be reinforced with cords of textile material.

### Summary of the Invention

The invention relates to a tire in accordance with claim 1.

Dependent claims refer to preferred embodiments of the invention.

A tire in accordance a first preferred aspect of the present invention includes a carcass ply, a tread disposed radially outward of a crown region of the carcass ply, and a shearband structure having an overall axial width substantially equal to a tread width interposed between the tread and the crown region in circumferential surrounding relation to the carcass ply. The shear band structure includes a first shearband layer and a second shearband layer radially adjacent the first shear band layer. The first shear band layer includes a first reinforced composite with first reinforcement cords embedded in a first rubber matrix. The first reinforcement cords have having an aramid construction and a twist multiplier (TM) between 2.0 and 6.0.

According to another preferred aspect of the tire, the second shearband layer includes a second reinforced composite with second reinforcement cords embedded in a second rubber matrix. The second reinforcement cords have an aramid construction and a twist multiplier (TM) between 2.0 and 6.0.

According to still another preferred aspect of the tire, the first reinforcement cords have a Z twist between 100 TPM and 300 TPM.

According to yet another preferred aspect of the tire, the first reinforcement cords have a S twist between 100 TPM and 300 TPM.

According to still another preferred aspect of the tire, the second reinforcement cords have a Z twist between 100 TPM and 300 TPM.

According to yet another preferred aspect of the tire, second reinforcement cords have a S twist between 100 TPM and 300 TPM.

According to still another preferred aspect of the tire, the first reinforcement cords have a density within the first rubber matrix between 15 EPI and 35 EPI.

According to yet another preferred aspect of the tire, the first reinforcement cords have a density within the first rubber matrix between 22 EPI and 25 EPI.

According to still another preferred aspect of the tire, the first reinforcement cords have a density within the first rubber matrix of about 28 EPI.

According to yet another preferred aspect of the tire, the second reinforcement cords have a density within the second rubber matrix between 15 EPI and 35 EPI.

According to still another preferred aspect of the tire, the second reinforcement cords have a density within the second rubber matrix between 22 EPI and 25 EPI.

According to yet another preferred aspect of the tire, the second reinforcement cords have a density within the second rubber matrix of about 28 EPI.

### Definitions

As used herein and in the claims:
"Annular" means formed like a ring.
"Aramid" and "Aromatic polyamide" both mean a manufactured fiber in which the fiber-forming substance is generally recognized as a long chain of synthetic aromatic polyamide in which at least 85% of the amide linkages are attached directly to the two aromatic rings. Representative of an aramid or aromatic polyamide is a poly (p- phenyleneterephthalamide).
"Aspect ratio" means the ratio of a tire section height to its section width. For example, the aspect ratio may be the maximum axial distance between the exterior of the tire sidewalls when unloaded and inflated at normal pressure, multiplied by 100% for expression as a percentage. Low aspect ratio may mean a tire having an aspect ratio of 65 and below.
"Axial" and "axially" refer to lines or directions that are parallel to the axis of rotation of the tire.
"Belt structure", or "shearband structure", means at least two annular layers or plies of parallel cords, woven or unwoven, underlying the tread, unanchored to the bead, and having cords inclined respect to the equatorial plane (EP) of the tire. The belt/shear band structure may also include plies of parallel cords inclined at relatively low angles, acting as restricting layers.
"Cable" means a cord formed by twisting together two or more plied yarns.
"Carcass" means the tire structure apart from the shearband structure, tread, undertread, and sidewall rubber over the plies, but including the beads.
"Circumferential" and "circumferentially" mean lines or directions extending along the perimeter of the surface of the annular tire parallel to the equatorial plane (EP) and perpendicular to the axial direction; it can also refer to the direction of the sets of adjacent circular curves whose radii define the axial curvature of the tread, as viewed in cross section.
"Cord" means one of the reinforcement strands of which the reinforcement structures of the tire are comprised.
"Cord angle" means the acute angle, left or right in a plan view of the tire, formed by a cord with respect to the equatorial plane (EP). The "cord angle" is measured in a cured but uninflated tire.
"Cord twist" means each yarn of the cord has its component filaments twisted together a given number of turns per unit of length of the yarn (usually expressed in turns per inch (TPI) or turns per meter (TPM)) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.
"Cut shearband ply" refers to a shearband having a width less than the tread width, which lies flat over the carcass plies in the crown area of the tire.
"Crown" means that portion of the tire in the proximity of the tire tread.
"Denier" means the weight in grams per 9000 meters (unit for expressing linear density). "Dtex" means the weight in grams per 10,000 meters.
"Density" means weight per unit length.
"Equatorial plane (EP)" means the plane perpendicular to the tire's axis of rotation and passing through the center of its tread; or the plane containing the circumferential centerline of the tread.
"Fabric" means a network of essentially unidirectionally extending cords, which may be twisted, and which in turn are composed of a plurality of a multiplicity of filaments (which may also be twisted) of a high modulus material.
"Fiber" is a unit of matter, either natural or man-made, that forms the basic element of filaments; characterized by having a length at least 100 times its diameter or width.
"Filament count" means the number of filaments that make up a yarn. Example: 1000 denier polyester has approximately 190 filaments.
"LASE" is load at specified elongation.
"Lateral" means an axial direction.
"Lay length" means the distance at which a twisted filament or strand travels to make a 360° rotation about another filament or strand.
"Ply" means a cord-reinforced layer of rubber-coated radially deployed or otherwise parallel cords.
"Radial" and "radially" mean directions radially toward or away from the axis of rotation of the tire.
"Tenacity" means stress expressed as force per unit linear density of the unstrained specimen (cN/tex).
"Tensile stress" is force expressed in force/cross-sectional area. Strength in psi=12,800 times specific gravity times tenacity in grams per denier.
"Tension" for a cord means force on the cord expressed as mN/tex.
"TM" means twist multiplier. TM = the square root of (single ply Denier x number of plies) x (TPI/73).
"TPI" means twists per 2.54 cm.
"TPM" means twists per meter.
"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Brief Description of the Drawings

The present invention will be described by way of example and with reference to the accompanying drawings in which:
FIG. 1 is a cross-sectional view of an example tire of the present invention;
FIG. 2 is a cross-sectional view of another example tire of the present invention;
FIG. 3 is a perspective view of a shearband composite in accordance with the present invention; and
FIG. 4 is a table of properties of some example cord structures usable with the present invention.

### Detailed Description of Example Embodiments of the Present Invention

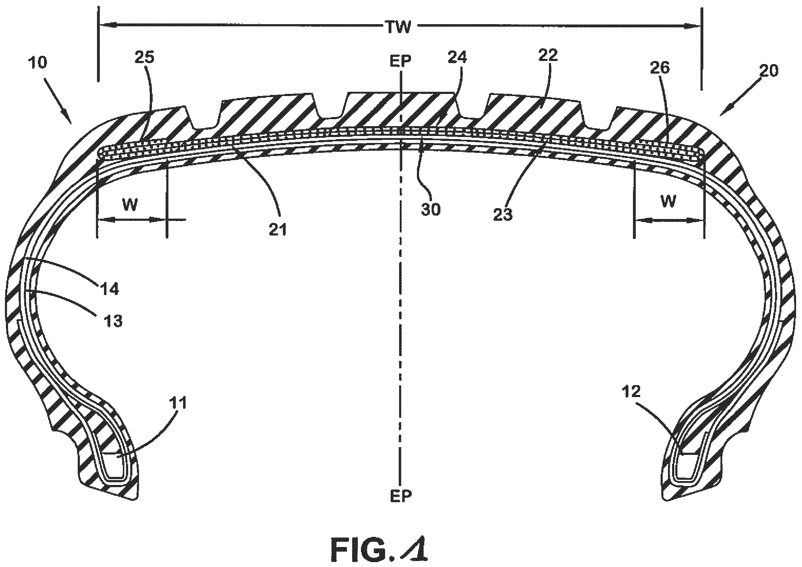

With reference to FIG. 1, there is represented an example tire 10, pneumatic or non-pneumatic. The tire 10 preferably has a pair of substantially inextensible bead cores 11, 12 axially spaced apart with one or preferably two carcass plies 13, 14 extending between the bead cores 11, 12. The carcass plies 13, 14 are preferably folded axially and radially outward about each of the bead cores 11, 12 and are preferably reinforced by cords substantially parallel to each other in the same ply at an angle in a range of from 50° to 90° with respect to the equatorial plane (EP) of the tire 10. Cords belonging to adjacent carcass plies 13, 14 preferably have opposite angles crossing each other at an angle of 2 degrees to 5 degrees for instance. The cords of the carcass plies 13, 14 may be any suitable material, such as steel, nylon, rayon, aramid, and/or polyester. The tire 10 may have carcass plies 13,14 of side-by-side polyester or rayon cables and has crown area 20 reinforced by a shear band assembly or structure 21, 30 located radially inward of the tire tread 22. The tire 10 preferably has an aspect ratio in a range of from 25 to 65.

In a preferred embodiment, the 10 includes a shearband structure 30 with an essentially rigid folded shearband 23 and a cut shearband 24 disposed radially outward of the folded shear band. Both shear bands 23, 24 are reinforced with aramid cables or yarns forming cords. The shear bands 23, 24 may have identical or different constructions. Such cords may be treated (coated) with one or more layers of adhesive in a process known as dipping. The modulus of a treated cord is a function of the twist of the different yarns used in the cord, the cord twist, and the manner that the cord is subjected to the dipping operation.

Cords of the folded shear band 23 are substantially parallel to each other and preferably make an angle in a range of from 15° to 40° with respect to the equatorial plane (EP) of the tire 10. The axially outer portions of the folded shearband 23 may be folded back on both lateral sides in a radially outward direction over axial edges of the cut shearband 24 with the folded portions 25, 26 being symmetrical with respect to the equatorial plane (EP). The folded portions 25, 26 preferably each have a transverse width (W) between 5% and 30%, or 15% and 30%, of the tread width (TW).

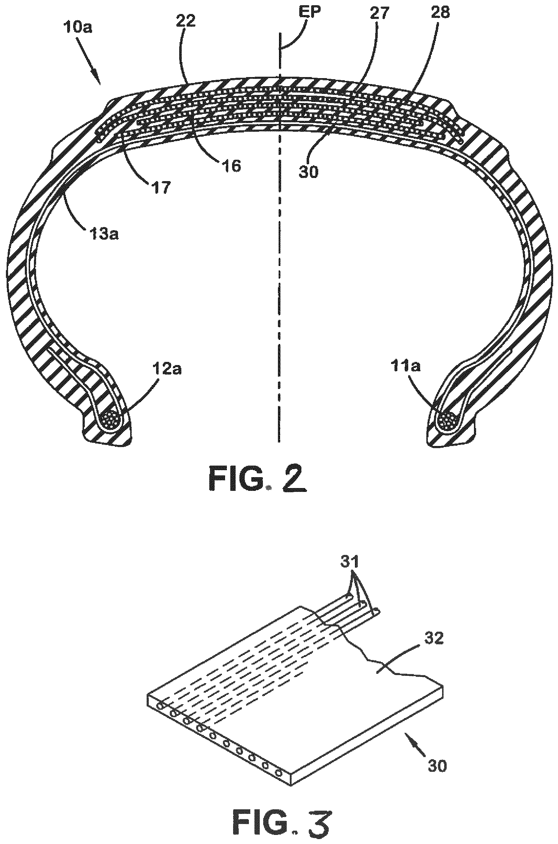

As shown in FIG. 2, another preferred embodiment of a tire 10a, includes one carcass ply 13a wrapped around beads cores 11a, 12a. The shear band structure 30 includes shearbands 16, 17 reinforced with aramid cords and overlays 27, 28 disposed radially outward of the shear bands 16, 17. The shear bands 16, 17 may have identical or different constructions. The overlays 27, 28 may be single sheets of overlay material, a cut overlay (e.g., reinforcement cords in the overlay discontinuous at random locations throughout the tire), and/or a spiral overlay. The reinforcing cords in the overlay 27, 28 may comprise nylon, polyester, polyamine, aramid, and/or any other suitable overlay reinforcement material.

As shown in FIG. 3, in accordance with the present invention, the shearbands 16, 17, 23, 24 of the shearband structure 30 include a reinforced composite with compression resistant reinforcement cords 31 of aramid embedded in a rubber matrix 32. The compression resistant reinforcement cords 31 are yarns of aramid having their component filaments twisted together a given number of turns per unit of length of the yarn (usually expressed in turns per inch, TPI, or in turns per meter, TPM). The aramid yarns are be twisted together to form a cord 31 with a twist level.

A first example compression resistant aramid reinforcement cord 31 for the shear band structure 30 has a 1100/4 dtex construction and a cord distribution density of 15 ends per 2.54 cm (EPI) to 35 EPI, or 22 EPI to 25 EPI, or 28 EPI. The first reinforcement cord 31 preferably have a twist between Z150/S150 turns per meter (TPM) and Z200/S200 TPM, such as Z180/S180 TPM, and a tension between 100 mN/tex and 200 mN/tex, such as 180 mN/tex or 120 mN/tex.

A second example compression resistant aramid reinforcement cord 31 for the shear band structure 30 has a 1210/3 dtex construction and a cord distribution density of 15 ends per 2.54 cm (EPI) to 35 EPI, or 22 EPI to 25 EPI, or 28 EPI. The second reinforcement cord 31 preferably has a twist between Z150/S150 turns per meter (TPM) and Z250/S250 TPM, such as Z200/S200 TPM, and a tension between 100 mN/tex and 150 mN/tex, such as 120 mN/tex.

As stated above, aramid shearband structures may be used in place of steel shear bands to reduce weight. Steel wire has limited compression resistance. However, twisted aramid cords provide higher compression resistance compared to steel wire. To maximize its benefits, compression resistant aramid cords may essentially mimic steel shear band wires' stress-strain curves. The gauge of the aramid cords may also be similar to the targeted steel wire gauge. Such "lower twist" aramid cord constructions provide higher tensions for a stiff, steelwire-like, dipped aramid cord.

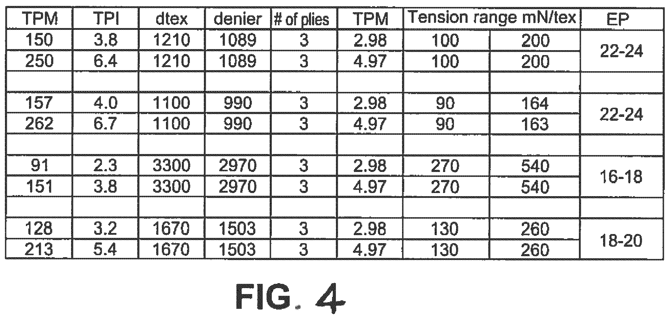

As shown in FIG. 4, the aramid cords 31 used have a twist multiplier TM in a range of from 2.00 to 6.00, or in a range of from 2.98 to 4.97. These cords are preferably tensioned in two of more different zones. These cords may replace steel wire in shear band structures of non-pneumatic tires or in spiral cord, 0 degree and/or angled shear bands. These cords can exhibit up to six times the durability of steel wires with similar stress-strain curves.

## Claims

1. A tire having at least one carcass ply (13, 13a, 14) , a tread (22) disposed radially outward of a crown region (20) of the carcass ply (13, 13a, 14), and a shear band structure (30, 21) having an overall axial width equal or substantially equal to a tread width or having an overall axial width in a range of from 95 to 105 percent of the tread width, the shear band structure (30, 21) being interposed between the tread (22) and the crown region (20) in circumferential surrounding relation to the at least one carcass ply (13, 13a, 14), the shear band structure (30, 21) including a first shear band layer (16, 22) and a second shear band layer (17, 23) radially adjacent the first shear band layer (16, 22), the first shear band layer (16, 22) including a first reinforced composite with first reinforcement cords (31) embedded in a first rubber matrix (32), the first reinforcement cords (31) being aramid cords of a first cord construction and having a twist multiplier (TM) in a range of from 2.0 to 6.0.

2. The tire as set forth in claim 1 wherein the second shear band layer (23, 28) includes a second reinforced composite with second reinforcement cords embedded in a second rubber matrix, the second reinforcement cords being aramid cords having a second construction and a twist multiplier (TM) in a range of from 2.0 to 6.0.

3. The tire as set forth in claim 1 or 2 wherein the first reinforcement cords (31) have a Z twist in a range of from 100 TPM to 300 TPM.

4. The tire as set forth in claim 1 or 2 wherein the first reinforcement cords (31) have a S twist of in a range of from 100 TPM to 300 TPM.

5. The tire as set forth in at least one of the claims 1 to 4 wherein the second reinforcement cords have a Z twist in a range of from 100 TPM to 300 TPM.

6. The tire as set forth in at least one of the claims 1 to 4 wherein the second reinforcement cords have a S twist in a range of from 100 TPM to 300 TPM.

7. The tire as set forth in at least one of the previous claims wherein the first reinforcement cords (31) have a density within the first rubber matrix (32) in a range of from 15 EPI (end per 2.54 cm) to 35 EPI (ends per 2.54 cm).

8. The tire as set forth in at least one of the previous claims wherein the first reinforcement cords (31) have a density within the first rubber matrix (32) in a range of from 22 EPI (end per 2.54 cm) to 25 EPI (ends per 2.54 cm) such as 28 EPI.

9. The tire as set forth in at least one of the previous claims wherein the second reinforcement cords have a density within the second rubber matrix in a range of from 15 EPI (end per 2.54 cm) to 35 EPI (ends per 2.54 cm).

10. The tire as set forth in at least one of the previous claims wherein the second reinforcement cords have a density within the second rubber matrix in a range of from 22 EPI (end per 2.54 cm) to 25 EPI (ends per 2.54 cm) such as 28 EPI.

11. The tire as set forth in at least one of the previous claims wherein the second reinforcement cords have a twist multiplier (TM) in a range of from 2.98 to 4.97.

12. The tire as set forth in at least one of the previous claims wherein the first reinforcement cords (31) have a twist multiplier (TM) in a range of from 2.98 to 4.97.

13. The tire as set forth in at least one of the previous claims wherein the first cord construction and the second cord construction are the same.

14. The tire as set forth in at least one of the previous claims wherein the first cord construction and/or the second cord construction is a 1100/4 dtex construction or a 1210/3 dtex construction.
